Europäisches Patentamt

European Patent Office

Office européen des brevets

(19)

(11) Veröffentlichungsnummer : **0 338 490 B1**

(12) **EUROPÄISCHE PATENTSCHRIFT**

(45) Veröffentlichungstag der Patentschrift :
**02.01.92 Patentblatt 92/01**

(51) Int. Cl.[5] : **H01G 1/02, H01C 13/02, H01F 15/10, H05K 5/00**

(21) Anmeldenummer : **89106889.2**

(22) Anmeldetag : **18.04.89**

(54) **Bauelement in Chip-Bauweise zum Befestigen auf einer Schaltplatte, mit einem elektrischen oder elektronischen Funktionskörper.**

(30) Priorität : **21.04.88 DE 3813435**

(43) Veröffentlichungstag der Anmeldung :
**25.10.89 Patentblatt 89/43**

(45) Bekanntmachung des Hinweises auf die Patenterteilung :
**02.01.92 Patentblatt 92/01**

(84) Benannte Vertragsstaaten :
**AT DE ES FR GB NL**

(56) Entgegenhaltungen :
EP-A- 0 162 149
DE-A- 3 332 293

(56) Entgegenhaltungen :
US-A- 4 499 524
US-A- 4 663 824
PATENT ABSTRACTS OF JAPAN, Band 10, Nr. 45 (P-430)[2102], 21. Februar 1986, Seite 136 P 430 & JP-A-60 191 316
JEE, Band 19, Nr. 191, November 1982, Seiten 47-50; Y. SHIBATA: "Building a better aluminum electrolytic capacitor"

(73) Patentinhaber : **SIEMENS AKTIENGESELLSCHAFT**
**Wittelsbacherplatz 2**
**W-8000 München 2 (DE)**

(72) Erfinder : **Utner, Ferdinand**
**Roter Brachweg 99**
**W-8400 Regensburg (DE)**

**Beschreibung**

Die Erfindung betrifft ein Bauelement in Chip-Bauweise mit einem elektrischen oder elektronischen Funktionskörper zum Befestigen auf einer Schaltplatte, der auf wenigstens zwei Außenflächen mit Belegungen versehen ist, das ferner bandförmige Anschlußelemente zum Verbinden der Belegungen mit Kontaktstellen einer auf der Schaltplatte befindlichen gedruckten Schaltung aufweist und bei dem der Funktionskörper in ein aus Isoliermaterial bestehendes vorgefertigtes Gehäuse in Becherform, aus dem die Anschlußelemente Kontaktflächen bildend herausgeführt sind, eingebaut ist.

Ein Bauelement mit diesen Merkmalen ist in der FIG 7 und zugehörigem Text der DE-AS 1064127 gezeigt und beschrieben.

Im Gefolge der Bemühungen um die Miniaturisierung von elektronischen Schaltungen setzte sich auch bei den Gehäuseformen von diskreten Bauelementen eine neue platzsparende Technologie durch. Die derzeit kleinste Gehäuseform ist die der Surface-Mounted-Devices (SMO), die auch als Chip-Bauelemente bezeichnet werden. Charakteristisch für diese oberflächenmontierbaren Bauelemente ist, daß sich bei ihnen sowohl der Körper, als auch die Kontaktstellen auf der Leiterbahnseite von Schaltplatten finden. Im Gegensatz zu den herkömmlichen bedrahteten Bauelementen, deren Anschlußelemente durch Löcher in der Schaltplatte auf die andere Seite derselben geführt und dort an den jeweiligen Kontaktstellen verlötet wurden, müssen SMD-Bauelemente selber lötfest sein.

Da die SMD-Bauelemente dem Lötprozeß unmittelbar ausgesetzt werden, müssen ihre Bauweise bzw. die verwendeten Materialien für die heute üblichen Schwall-, Tauch- oder Reflow-Lötverfahren ausgelegt sein. Dabei werden die Bauelemente bis etwa 10 Sekunden lang einer Temperatur von 260°C und mehr ausgesetzt. Deshalb erfordert die SMD-Technologie, um die Wärmebeständigkeit des Bauelements beim Lötprozeß zu gewährleisten, je nach dem speziellen zu schützenden elektrischen oder elektronischen Funktionskörper, die Ergreifung einer oder mehrerer zusätzlicher Schutzmaßnahmen.

Derartige Bauelemente samt Schutzmaßnahmen, insbesondere metallisierte Schichtkondensatoren in Chip-Bauweise, sind an sich bekannt.

In der DE-OS 3412492 (entspr. EP-A 0162149 bzw. US-PS 4617609) wird beispielsweise ein Chip-Kondensator beschrieben, bei dem der Kondensatorkörper mit einer quaderförmigen Umhüllung umpreßt ist und unter anderem durch eine Wärmefalle geschützt wird. Hierbei wird die Wärmeleitung zwischen dem Lötbad und dem Kondensatorwickel durch eine Querschnittsveränderung der Anschlußelemente verringert.

Um die Änderungen der elektrischen Werte der Kondensatorkörper durch den Tauchlötvorgang sicher in den vorgeschriebenen Grenzen halten zu können, — z.B. darf die relative Kapazitätsänderung 2% nicht überschreiten — werden gegenwärtig hauptsächlich die Maßnahmen der Wickeltemperung und der Wahl besonderer Materialien für das Isoliergehäuse bzw. hoher Wanddicken desselben angewandt. Die Umhüllung von MK-Kondensatoren durch hochtemperaturfeste und gut wärmedämmende Thermoplaste wie PPS (Polyphenylensulfid) ist beispielsweise auch in der DE-OS 3412492 beschrieben.

Die vorliegende Erfindung ist bei allen Chip-Bauelementen anwendbar, vorzugsweise jedoch bei solchen Chip-Bauelementen, deren Funktionskörper wärmeempfindlich ist. Chip-Bauelemente sind beispielsweise die genannten Kondensatoren mit Kunststoff als Dielektrikum, das eine dünne Metallisierung trägt (MK-Kondensatoren), Tantal- und Keramikkondensatoren, Widerstände, Heiß- und Kaltleiter, Induktivitäten, Relais, Halbleiter, Hybrid-Schaltkreise usw.

Bisher werden die Gehäuse der Chip-Bauelemente hergestellt, indem die Funktionskörper umpreßt bzw. spritzumpreßt werden. Diese Bauweise der Chip-Bauelemente ist aus mehreren Gründen problematisch : Dies setzt zum Einen die Anschaffung teurer Spritzmaschinen bzw. teurer Spritz-preßformen voraus. Außerdem müssen lange Härtezeiten des Gehäusematerials und große, bis zu 50% des Materialverbrauchs erreichende Angußverluste in Kauf genommen werden.

Zum Anderen ändern beim Umspritz- oder Spritzumpreßvorgang unter den dabei auftretenden Temperaturen, Drücken und Massestrom-Geschwindigkeiten (Abrasion) die Funktionskörper der Bauelemente ihre elektrischen Werte mehr oder weniger stark. Dies kann zu einem oft erheblichen Ausschuß führen.

Ferner besteht die Gefahr des Auftretens von Rißbildungen im umhüllenden Gehäuse beim Tauchlötvorgang. Dies liegt daran, daß der Funktionskörper bei thermischer Belastung eine mechanische Belastung auf die Wände des umhüllenden Gehäuses ausübt. Die Gefahr von Rißbildungen kann vermieden werden, indem die Wanddicken des Gehäuses um 50 bis 80%, d.h. auf 0,7 mm und mehr verstärkt werden. Dabei handelt man sich natürlich neben einer Materialkostenerhöhung eine Maßvergrößerung der Chips ein.

Schließlich ist nach dem Umspritz- bzw. Spritzumpreßvorgang ein sogenanntes Entflashen notwendig. Dabei werden geringe Mengen der Spritzmasse entfernt, die durch Nahtstellen an nicht dafür vorgesehene Stellen des Bauelements gedrungen und dort haften geblieben sind.

Für den Spezialfall metallisierter Kunststoff-Kondensatoren ist die Anwendung der bisherigen Technik mit dem besonderen Nachteil verbunden, daß die Wickel, um eine ausreichende Temperaturfestigkeit zu erhalten, vor dem Tauchlötvorgang in einem relativ aufwendigen Verfahren getempert werden müssen. Durch diesen Herstellungsschritt verringert sich die Kapazität der Kondensatoren, und es kann zusätzlicher Ausschuß entstehen, was insgesamt zu erhöhten Herstellungskosten führt.

Der vorliegenden Erfindung liegt die Aufgabe zugrunde, ein Bauelement der eingangs angegebenen Art derart zu gestalten, daß die Forderungen an die Wärmebeständigkeit und an die mechanische Beständigkeit, insbesondere in Hinsicht auf den Tauchlötvorgang möglichst noch verbessert erfüllt werden, ohne dabei komplizierte und teure Maßnahmen wie beispielsweise Wickeltemperung, oder die Technik der Spritz- bzw. Spritzumpressumhüllung zu erfordern.

Zur Lösung dieser Aufgabe ist das Bauelement der eingangs angegebenen Art erfindungsgemäß dadurch gekennzeichnet, daß der Funktionskörper durch Stützelemente im Gehäuse wenigstens einen Luftspalt bildend gehalten ist, der kleiner als 1 mm weit ist und den Funktionskörper allseitig von den inneren Gehäuseflächen trennt, ausgenommen dort, wo der Funktionskörper mittels der Stützelemente, deren Stützflächen sehr klein gegenüber der Oberfläche des Funktionskörpers sind, im Gehäuse fixiert ist.

Die lichte Weite des Luftspaltes kann wenige Zehntel mm, vorzugsweise 0,1 mm bis 0,3 mm betragen.

Die Wanddicke des Gehäuses kann 0,1 bis 0,7 mm, vorzugsweise 0,2 bis 0,4 mm betragen.

Die Stützelemente können als Abstandswarzen, Rippen oder als abgeschrägte Ecken ausgebildet sein und entweder am Becher wie Deckel mitangespritzt und/oder vor bzw. nach dem Wickeleinbau beispielsweise eingeprägt werden, oder sie können durch vom Funktionskörper abstehende Teile der Anschlußelemente gebildet sein. Das Gehäuse kann zweiteilig sein und aus Duroplasten oder Thermoplasten bestehen. Die zwei Teile des Gehäuses können ein Becher mit Deckel sein, wobei diese insbesondere die Form von zwei Halbschalen haben können. Der Deckel kann über ein Scharnier an den Becher mit angespritzt sein, und bwz. oder die Anschlußelemente können in den Deckel mit eingespritzt sein.

Das Gehäuse kann auch aus einem Gehäuserahmen mit eingespritzen Anschlußelementen und zwei Deckeln gebildet sein.

Es ist vorteilhaft, wenn der Deckel entweder durch Warmverformung oder Ultraschallschweißen oder Klebung versiegelt ist.

Ferner können Gehäuse und Deckel aus gestanztem oder geschichtetem Hartpapier- oder Hartgewebestreifen gebildet sein, wobei diese durch Klebung oder mittels vorgefertigter mehrschichtiger Lagen (Prepregs) verbunden sind. Die Gehäuseteile können auch aus einer reinen Schichtung vorgefertigter mehrschichtiger Lagen (Prepregs) gebildet sein.

Das Gehäuse kann auch aus einem Rahmen und zwei Deckeln bestehen, wobei die Anschlußelemente zweiteilig sind und aus außerhalb des Gehäuses befindlichen Anschlußkappen sowie aus Bodenstücken aus ein- oder beidseitig kupferkaschiertem Laminat gebildet sind, die an einem der Deckel befestigt sind und auf denen der Funktionskörper mit seinen Belegungen sowie der Gehäuserahmen aufliegen und an deren Kupferbahn er festgelötet ist und die eine elektrisch leitende Verbindung zu den äußeren Anschlußflächen herstellen.

Die Anschlußelemente dürfen aus bereits vorverzinntem Blech bestehen. Dieser Vorteil ergibt sich, da bei der Verarbeitung keine thermische Belastung der Zinnoberfläche auftritt.

Nicht zuletzt ist es vorteilhaft, wenn eine zusätzliche Versiegelung und bzw. oder ein Haftvermittlerauftrag am Durchtritt der Anschlußelemente durch den Kunststoff des Gehäuses vorhanden ist. Dies bringt den Vorteil einer besseren Feuchtedichtigkeit mit sich. Die Anschlußelemente können in dem Abschnitt, der zu einem wesentlichen Teil innerhalb dieses Gehäuses liegt, wenigstens eine als Wärmefalle dienende Verengung aufweisen und somit zusätzlich zur Wärmedämmung beitragen. Die Bauelemente können vorteilhafter Weise entweder je für sich, oder aus einem Verbund von Einzelgehäusen in Streifen oder in Bandform mit nachfolgender Vereinzelung durch Sägen, Stanzen oder Lasertrennverfahren hergestellt sein.

Die Vorteile der Erfindung bestehen unter anderem darin, daß die Luftschicht mit ihrer gegenüber Duro- wie Thermoplasten um den Faktor 10 bis 30 schlechteren Wärmeleitung eine sehr gute Wärmedämmung gewährleistet, dabei gleichzeitig als mechanischer Puffer für die thermische Ausdehnung des Funktionskörpers fungiert und deshalb geringe, nur ca. 0,3 mm starke Gehäusedicken ermöglicht, wobei für die normalen Wickelgrößen keine zusätzlichen Maßnahmen wie beispielsweise Wickeltemperung vor dem Tauchlötvorgang, ergriffen werden müssen. Der Einbau des Funktionskörpers des Bauelements in ein beispielsweise aus Becher und Deckel bestehendes Gehäuse ist einfach und wirtschaftlich durchführbar. Die mit der sonst üblichen Technik des Umspritzens bzw. des Spritzumpressens verbundene Problematik fällt fort, andererseits können das Einstecken der mit Anschlußelementen versehenen Funktionskörper in die Gehäuse sowie die Deckelmontage in kurzen Taktzeiten mit relativ geringem maschinellem Aufwand erfolgen. Alle Kundenforderungen, die z.B. aus Gründen der Bestückungssicherheit bezüglich einer exakten Außenkonfiguration der Chips erhoben werden, können noch besser als bei umpreßten Ausführungen erfüllt werden, da z.B. an den Außenflächen des Gehäuses keine Auswerfermarkierungen vorhanden sind.

Die Erfindung wird nachfolgend anhand der in den FIG dargestellten Ausführungsbeispiele näher erläutert.

Es zeigen :

FIG 1 einen Schnitt entlang der Längsseite eines als Becher mit Deckel ausgeführten Bauelements,

FIG 2 einen Schnitt entlang der Schmalseite derselben Ausführungsform,

FIG 3 einen Schnitt entlang der Längsseite einer Ausführungsform mit zwei Halbschalen,

FIG 4 eine Ansicht der Schmalseite derselben Ausführungsform,

die FIG 5, 6, 7 u. 8 bevorzugte Ausführungsformen der Fixierung u. Zentrierung des Funktionskörpers,

die FIG 9, 10 u. 11 weitere Ausführungsformen der Erfindung,

FIG 12 besondere Ausführungsformen der Verbindung Becher-Deckel,

die FIG 13, 14, 15, 16, 17 u. 18 besondere Ausführungsformen der Erfindung mit Gehäuserahmen und Deckeln.

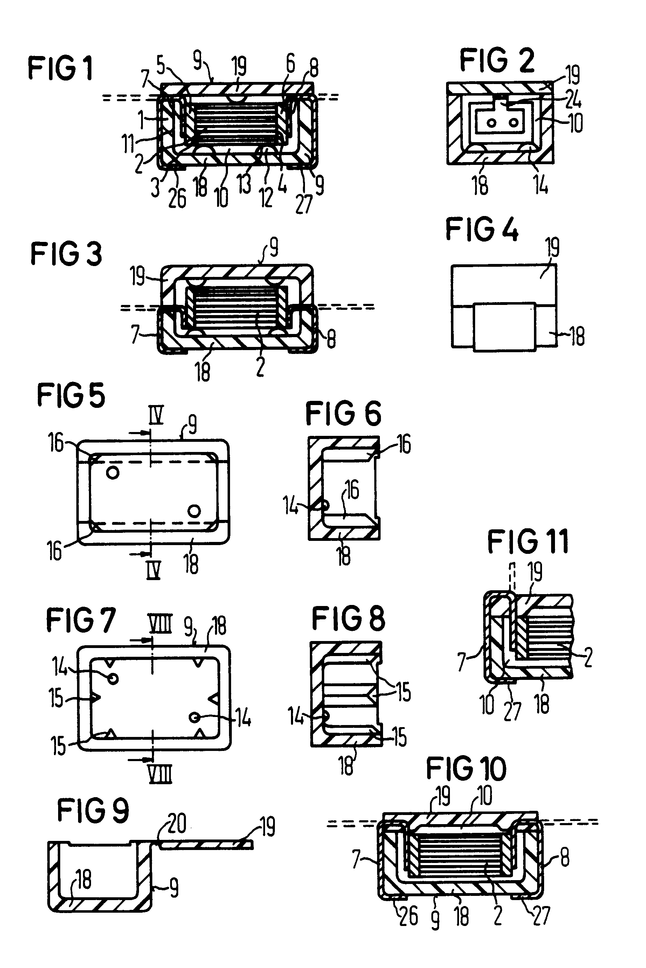

In FIG 1 ist das Bauelement 1 dargestellt, das aus einem Funktionskörper 2 mit Außenflächen 3 und 4 und Belegungen 5 und 6, an denen Anschlußelemente befestigt sind, und aus einem Gehäuse 9 besteht. Die Anschlußelemente 7 und 8 treten gemäß FIG 1 in Höhe der Nahtstelle zwischen dem Becher 18 und dem Deckel 19 des Gehäuses 9 aus dem Kunststoffmaterial des Gehäuses 9 heraus und sind dann an der Oberfläche verlaufend umgebogen, so daß Kontaktflächen 26 und 27 an der Unterseite des Bechers 18 vorhanden sind. An diesen Kontaktflächen wird das Bauelement mit dem betreffenden Stellen der gedruckten Schaltungsplatte durch Lötung verbunden.

Der Funktionskörper 1 wird durch Stützelemente 12, hier in Form von Abstandswarzen 14, im Gehäuse 9 festgehalten. Von den relativ kleinen Stützflächen 13 der Stützelemente 12 abgesehen, ist der Funktionskörper 2 allseitig von einem Luftspalt 10 umgeben und durch ihn von den inneren Gehäuseflächen 11 getrennt.

In FIG 2 wird aus einer anderen Perspektive ein Bauteil gezeigt, das dem der FIG 1 entspricht, wobei eine Verengung 24 gezeigt ist.

Die FIG 3 zeigt ein Gehäuse 9, das aus zwei Halbschalen besteht, von denen eine als Becher 18 und die andere als Deckel 19 ausgebildet sind. Dasselbe Gehäuse ist in FIG 4 in einer Seitenansicht gezeigt.

In den FIG 5 bis 8 sind die Möglichkeiten der Zentrierung und Fixierung des Funktionskörpers 2 im Gehäuse 9 mittels abgeschrägter Ecken 16, Abstandswarzen 14, bzw. mittels Rippen 15 gezeichnet. Solche Maßnahmen sind für mit gehärtetem Kunststoff vergossene elektrische Bauelemente schon bekannt und beispielsweise in der nicht vorveröffentlichten DE-OS 3705868, entsprechend der europäischen Anmeldung 88 102 631.4 (VPA 87 P 1094), beschrieben. Die FIG 6 und 8 zeigen dabei jeweils einen Schnitt entlang den in den FIG 5 bzw. 7 eingezeichneten Linien VI. bzw. VIII.

In FIG 9 ist ein Gehäuse 9 gezeigt, bei dem der Deckel 19 mittels eines biegsamen Scharniers 20 mit dem Becher 18 einstückig verbunden ist.

Die FIG 10 zeigt eine Ausführungsform, bei der die Anschlußelemente 7 und 8 in den vorgefertigten Deckel 19 eingespritzt sind, wobei sie seitlich aus dem Gehäuse 9 herausgeführt und wie bei FIG 1 beschrieben umgebogen sind.

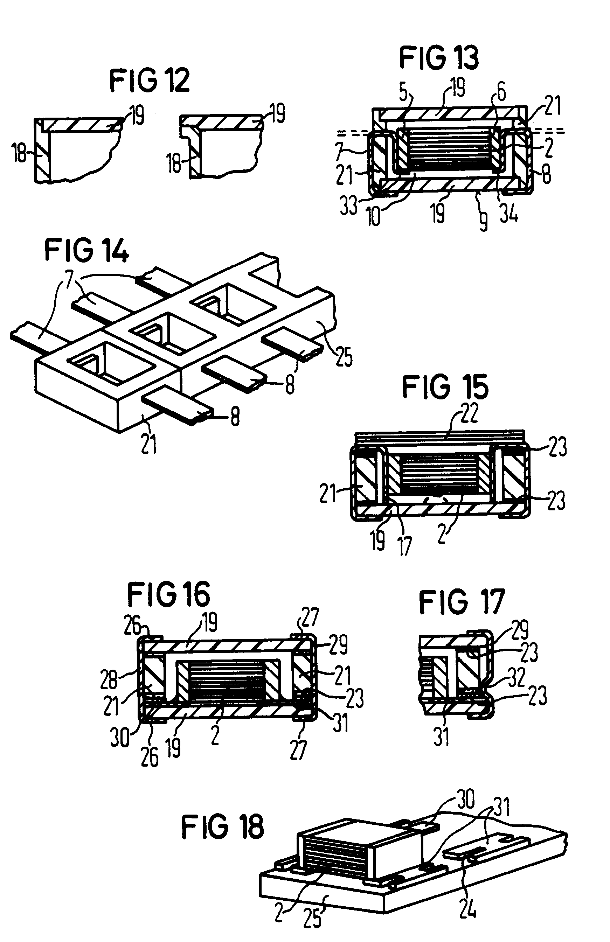

In der FIG 11 ist ein ähnliches Bauelement gezeigt, bei dem aber die Anschlußelemente 7 und 8 so in den Deckel 19 eingespritzt sind, daß sie an der Oberseite des Gehäuses 9 heraustreten und dann an der Außenoberfläche entlanggeführt sind und am Boden die Anschlußfläche 26 bzw. 27 bilden.

Die FIG 12 zeigt zwei an sich bekannte Ausführungsformen der Verbindung des Bechers 18 mit dem Deckel 19 durch Versiegelung, wie oben beschrieben. Dabei kann die Versiegelung der Gehäuseteile 18 und 19 beispielsweise durch Warmverformung, insbesondere durch einen beheizten Stempel, mittels Warmluft, Behandeln mit offener Flamme oder durch Laserstrahlen erfolgen.

Die FIG 13 zeigt ein Bauelement, bei dem das Gehäuse 9 aus einem Gehäuserahmen 21 mit eingespritzten Anschlußelementen 7 und 8, sowie aus zwei Deckeln 19 besteht. Die Deckel 19 sind wie oben beschreiben mit dem Gehäuserahmen 21 versiegelt.

In der FIG 14 ist schematisch gezeigt, wie das Bauelement gemäß FIG 13 hergestellt werden kann. Es wird dabei ein Verbund 25 von Gehäuserahmen 21 für Einzelgehäuse so vorbereitet, daß die Anschlußelemente 7 und 8 eingespritzt sind. Nach dem Einsetzen der Funktionskörper 2 (s. FIG 13) bis auf die Auflagen 33 und 34 und nach mechanischer und elektrischer Verbindung ihrer Belegungen 5 und 6 mit den Anschlußelementen 7 und 8 wird der Verbundkörper 25 beidseitig mit Deckeln 19 verschlossen. Das resultierende Gebilde kann dann in einzelne Bauelemente zerteilt werden.

In FIG 15 ist wiederum eine andere Ausführungsform eines Bauteils gezeigt, wobei der Deckel 19 aus Einzelteilen, z.B. Hartpapierstreifen 22 geschichtet ist. Ferner erkennt man aus der Zeichnung, daß als Versiegelung Prepregs 23 (siehe oben) verwendet wurden. Außerdem erkennt man, daß Teile 17 der Anschlußelemente 7 und 8 zur Abstandsfixierung des Funktionskörpers 2 verwendet wurden. Natürlich sind auch die anderen genannten Möglichkeiten der Abstandsfixierung anwendbar.

In den FIG 16, 17 und 18 ist eine andere Ausführungsform der Anschlußelemente 7 und 8 gezeichnet. Die Belegungen 5 und 6 des Funktionskörpers 2 sind durch Lötung fest mit kupferkaschierten Bodenstücken 30 und 31 verbunden, die als elektrisch leitende Verbindung zu den äußeren Anschlußkappen 28 und 29 dienen.

Die FIG 17 zeigt, daß die äußeren Anschlußkappen 28 und 29 mit einer Sicke 32 zur besseren Kontaktierung der Kupferbahn versehen werden kann.

Die FIG 18 zeigt, wie der Funktionskörper 2, entsprechend dem in den FIG 16 und 17 dargestellten Ausführungsbeispiel auf den Bodenstücken 30 und 31 aufliegt, wobei der untere Deckel 19 des Gehäuses in Bandform dargestellt ist. Außerdem erkennt man die Querschnittsverengung 24 der Bodenstücke 30 und 31.

Bezugszeichenliste

| | |
|---|---|
| 1 | Bauelement |
| 2 | Funktionskörper |
| 3 | Außenfläche des Funktionskörpers 2 |
| 4 | Außenfläche des Funktionskörpers 2 |
| 5 | Belegung |
| 6 | Belegung |
| 7 | Anschlußelement |
| 8 | Anschlußelement |
| 9 | Gehäuse |
| 10 | Luftspalt |
| 11 | Innere Gehäuseflächen |
| 12 | Stützelemente |
| 13 | Stützfläche der Stützelemente 12 |
| 14 | Abstandswarzen |
| 15 | Rippen |
| 16 | Abgeschrägte Ecken |
| 17 | Teile der Anschlußelemente 7 und 8 |
| 18 | Becher |
| 19 | Deckel |
| 20 | Scharnier |
| 21 | Gehäuserahmen |
| 22 | Hartpapier- bzw. Hartgewebestreifen |
| 23 | Prepregs |
| 24 | Verengung |
| 25 | Verbund von Einzelgehäusen 9 |
| 26 | Kontaktfläche am Bauelement 1 |
| 27 | Kontaktfläche am Bauelement 1 |
| 28 | Anschlußkappe |
| 29 | Anschlußkappe |
| 30 | Bodenstück |
| 31 | Bodenstück |
| 32 | Sicke |
| 33 | Auflage |
| 34 | Auflage |

**Patentansprüche**

1. Bauelement (1) in Chip-Bauweise mit einem elektrischen oder elektronischen Funktionskörper (2) zum Befestigen auf einer Schaltplatte, der auf wenigstens zwei Außenflächen (3, 4) mit Belegungen (5, 6) versehen ist, das ferner bandförmige Anschlußelemente (7, 8) zum Verbinden der Belegungen mit Kontaktstellen einer auf der Schaltplatte befindlichen gedruckten Schaltung aufweist und bei dem der Funktionskörper (2) in ein aus Isoliermaterial bestehendes vorgefertigtes Gehäuse (9) in Becherform, aus dem die Anschlußelemente (7, 8) Kontaktflächen (26, 27) bildend herausgeführt sind, eingebaut ist, **dadurch gekennzeichnet,** daß der Funktionskörper (2) durch Stützelemente (12) im Gehäuse (9) wenigstens einen Luftspalt (10) bildend gehalten ist, der kleiner als 1 mm weit ist und den Funktionskörper (2) allseitig von den inneren Gehäuseflächen (11) trennt, ausgenommen dort, wo der Funktionskörper (2) mittels der Stützelemente (12), deren Stützflächen (13) sehr klein gegenüber der Oberfläche des Funktionskörpers (2) sind, im Gehäuse (9) fixiert ist.

2. Bauelement nach Anspruch 1, **dadurch gekennzeichnet,** daß die lichte Weite des Luftspaltes wenige Zehntel mm, vorzugsweise 0,1 mm bis 0,3 mm beträgt.

3. Bauelement nach Anspruch 1, **dadurch gekennzeichnet,** daß die Wanddicke des Gehäuses 0,1 bis 0,7 mm, vorzugsweise 0,2 bis 0,4 mm beträgt.

4. Bauelement nach Anspruche 1, **dadurch gekennzeichnet,** daß die Stütz- bzw. Zentrierelemente (12) als Abstandswarzen (14), Rippen (15), oder als abgeschrägte Ecken (16) ausgebildet sind und entweder am Becher/Deckel mit angespritzt und-/oder vor bzw. nach dem Wickeleinbau eingeprägt worden sind, oder daß sie durch vom Funktionskörper (2) abstehende Teile (17) der Anschlußelemente (7, 8) gebildet sind.

5. Bauelement nach Anspruch 1, **dadurch gekennzeichnet,** daß das Gehäuse (9) zweiteilig ist und aus Duroplasten oder Thermoplasten besteht.

6. Bauelement nach Anspruch 5, **dadurch gekennzeichnet,** daß die zwei Teile des Gehäuses (9) aus einem Becher (18) mit Deckel (19) bestehen, wobei Becher (18) und Deckel (19) auch in Form von Halbschalen vorliegen.

7. Bauelement nach Anspruch 5, **dadurch gekennzeichnet,** daß der Deckel (19) über ein Scharnier (20) an den Becher (18) mit angespritzt ist, und/oder, daß die Anschlußelemente (7, 8) in den Deckel (19) eingespritzt sind.

8. Bauelement nach Anspruch 1, **dadurch gekennzeichnet,** daß das Gehäuse (9) aus einem Gehäuserahmen (21) mit eingespritzten Anschlußelementen (7, 8) und zwei Dekkeln (19) gebildet ist.

9. Bauelement nach Anspruch 5, **dadurch gekennzeichnet,** daß die Gehäuseteile (18, 19) durch Warmverformung, Schweißen mittels Ultraschall, Laser, Flamme, Heißluft oder durch Klebung miteinander versiegelt sind.

10. Bauelement nach Anspruch 5, **dadurch**

gekennzeichnet, daß die Gehäuseteile (18, 19) aus gestanzten oder geschichteten Hartpapier- oder Hartgewebestreifen (22) gebildet sind, und durch Klebung oder mittels vorgefertigter mehrschichtiger Lagen (23) (Prepregs) verbunden sind.

11. Bauelement nach Anspruch 5, **dadurch gekennzeichnet,** daß die Gehäuseteile (18, 19) aus einer reinen Schichtung vorgefertigter mehrschichtiger Lagen (Prepregs) (23) gebildet sind.

12. Bauelement nach Anspruch 1, **dadurch gekennzeichnet**, daß das Gehäuse aus einem Rahmen (21) und zwei Deckeln (19) besteht und daß die Anschlußelemente (7, 8) zweiteilig sind und aus außerhalb des Gehäuses (9) befindliche Anschlußkappen (28, 29) sowie aus Bodenstücken (30, 31) aus ein- oder beidseitig kupferkaschiertem Laminat gebildet sind, die an einem der Deckel (19) befestigt sind und auf denen der Funktionskörper (2) mit seinen Belegungen (5, 6) sowie der Gehäuserahmen (21) aufliegen und an deren Kupferbahn er festgelötet ist und die eine elektrisch leitende Verbindung zu den äußeren Anschlußflächen (28, 29) herstellen.

13. Bauelement nach einem der Ansprüche 1 bis 12, **dadurch gekennzeichnet,** daß die Anschlußelemente (7, 8) aus bereits vorverzinntem Blech bestehen.

14. Bauelement nach Anspruch 1, **dadurch gekennzeichnet,** daß eine zusätzliche Versiegelung und/oder ein Haftvermittlerauftrag am Durchtritt der Anschlußelemente (7, 8) durch den Kunststoff des Gehäuses (9) vorhanden ist.

15. Bauelement nach Anspruch 1, **dadurch gekennzeichnet,** daß die Anschlußelemente (7, 8) in dem Abschnitt, der zu einem wesentlichen Teil innerhalb des Gehäuses (9) liegt, wenigstens eine als Wärmefalle dienende Verengung (24) aufweisen.

16. Bauelement nach Anspruch 1, **dadurch gekennzeichnet,** daß es entweder je für sich oder aus einem Verbund (25) von Einzelgehäusen (9) in Streifen- oder Bandform mit nachfolgender Vereinzelung durch Sägen, Stanzen oder Lasertrennverfahren hergestellt ist.


## Claims

1. Chip component (1), having an electrical or electronic function member (2), for mounting on a printed circuit board, which component is provided with coatings (5, 6) on at least two outer surfaces (3, 4), which furthermore has strip-shaped terminal elements (7, 8) for connecting the coatings to contact points of a printed circuit located on the printed circuit board, and in which the function member (2) is installed in a prefabricated casing (9), in the shape of a cup and consisting of dielectric material, from which the terminal elements (7, 8) protrude, forming contact surfaces (26, 27), characterised in that the function member (2) is held in the casing (9) by support elements (12), forming at least one air gap (10) which is less than 1 mm wide and separates the function member (2) from the inner casing surfaces (11) on all sides, except where the function member (2) is fixed in the casing (9) by means of the support elements (12), the support surfaces (13) of which are very small with respect to the surface of the function member (2).

2. Component according to Claim 1, characterised in that the clear width of the air gap is a few tenths of a mm, preferably 0.1 mm to 0.3 mm.

3. Component according to Claim 1, characterised in that the wall thickness of the casing is 0.1 to 0.7 mm, preferably 0.2 to 0.4 mm.

4. Component according to Claim 1, characterised in that the support elements and centring elements (12) are designed as spacer studs (14), ribs (15) or as oblique corners (16) and are either injection moulded on the cup/cover and/or are impressed before or after the winding installation, or in that the support and centring elements (12) are formed by parts (17) of the terminal elements (7, 8) spreading from the function member (2).

5. Component according to Claim 1, characterised in that the casing (9) is in two parts and consists of thermosetting plastics or thermoplastics.

6. Component according to Claim 5, characterised in that the two parts of the casing (9) consist of a cup (18) having a cover (19), cup (18) and cover (19) also existing in the form of half-shells.

7. Component according to Claim 5, characterised in that the cover (19) is injection moulded on the cup (18) via a hinge (20), and/or in that the terminal elements (7, 8) are injection moulded in the cover (19).

8. Component according to Claim 1, characterised in that the casing (9) is formed from a casing frame (21) having injection moulded terminal elements (7, 8) and two covers (19).

9. Component according to Claim 5, characterised in that the casing parts (18, 19) are sealed to each other by thermal deformation, welding by means of ultrasound, laser, flame, hot air, or by bonding.

10. Component according to Claim 5, characterised in that the casing parts (18, 19) are formed from stamped or layered laminated paper strips or laminated cloth strips (22), and are connected by bonding or by means of prefabricated multilayer laminates (23) (prepregs).

11. Component according to Claim 5, characterised in that the casing parts (18, 19) are formed from a pure stratification of prefabricated multilayer laminates (prepregs) (23).

12. Component according to Claim 1, characterised in that the casing consists of a frame (21) and two covers (19) and in that the terminal elements (7, 8) are in two parts and are formed from terminal caps (28, 29) located outside the casing (9) and from baseplates (30, 31), which are made from laminate clad with copper on one or both sides and are attached to one of the covers (19) and on which there rest the function member (2), with its coatings (5, 6), and the casing frame (21), and to the copper path of which the function member (2) is firmly soldered and which produce an electrically conductive connection to the outer terminal surfaces (28, 29).

13. Component according to one of Claims 1 to 12, characterised in that the terminal elements (7, 8) consist of sheet that is already pre-tinned.

14. Component according to Claim 1, characterised in that an additional sealing and/or a bonding agent coating is provided at the opening of the terminal elements (7, 8) through the plastic of the casing (9).

15. Component according to Claim 1, characterised in that the terminal elements (7, 8) have at least one constriction (24), serving as a thermal trap, in the section located to a significant extent inside the casing (9).

16. Component according to Claim 1, characterised in that it is produced either in each case on its own, or from a composite (25) of individual casings (9) in strip or band form, with subsequent separation by sawing, stamping or laser separating methods.

## Revendications

1. Composant (1) réalisé sous la forme d'une micro-plaquette comportant un corps fonctionnel électrique ou électronique (2), destiné à être fixé sur une plaquette de circuits et pourvu d'au moins deux surfaces extérieures (3, 4) comportant des revêtements (5, 6), et qui possède en outre des éléments de raccordement en forme de bandes (7, 8), destinés à relier les revêtements à des points de contact d'un circuit imprimé situé sur la plaquette à circuits, et dans lequel le corps fonctionnel (2) est monté dans un boîtier préfabriqué (9) réalisé en un matériau isolant et se présentant sous la forme d'un pot à partir duquel les éléments de raccordement (7, 8) sont ressortis pour former des surfaces de contact (26, 27), caractérisé par le fait que le corps fonctionnel (2) est maintenu dans le boîtier (9) par des éléments de support (12) qui définissent au moins une fente (10) qui possède une largeur inférieure à 1 mm et sépare, de tous côtés, le corps fonctionnel (2) par rapport aux surfaces intérieures (11) du boîtier, à l'exception de l'endroit où le corps fonctionnel (2) est fixé dans le boîtier (9) au moyen des éléments de support (12), dont les surfaces de support (13) sont très petites par rapport à la surface du corps fonctionnel (2).

2. Composant suivant la revendication 1, caractérisé par le fait que la largeur de la fente est égale à quelques dixièmes de mm et est comprise de préférence entre 0,1 mm à 0,3 mm.

3. Composant suivant la revendication 1, caractérisé par le fait que l'épaisseur de la paroi du boîtier est comprise entre 0,1 et 0,7 mm et de préférence entre 0,2 et 0,4 mm.

4. Composant suivant la revendication 1, caractérisé par le fait que les éléments de support ou de centrage (12) sont réalisés sous la forme de bossages d'entretoisement (14), de nervures (15) ou d'angles biseautés (16) et ont été formés par moulage par projection sur le pot/couvercle et/ou ont été formés par gaufrage avant ou après le montage de la bobine, ou qu'ils sont formés par des parties (17), qui font saillie sur le corps fonctionnel (2), des éléments de raccordement (7, 8).

5. Composant suivant la revendication 1, caractérisé par le fait que le boîtier (9) est formé de deux éléments et est constitué par des duroplastes et des thermoplastes.

6. Composant suivant la revendication 5, caractérisé par le fait que les deux parties du boîtier (9) sont constituées par un pot (18) et un couvercle (19), qui possèdent également la forme de demi-coques.

7. Composant suivant la revendication 5, caractérisé par le fait que le couvercle (19) est formé simultanément par moulage par injection sur le pot (18) en y étant relié par une charnière (20) et/ou que les éléments de raccordement (7, 8) sont moulés par injection dans le couvercle (19).

8. Composant suivant la revendication 1, caractérisé par le fait que le boîtier (11) est formé par un cadre (21) avec des éléments de raccordement (7, 8) moulé par injection et deux couvercles (19).

9. Composant suivant la revendication 5, caractérisé par le fait que les parties (18, 19) du boîtier sont scellées entre elles par déformation à chaud, soudage au moyen d'ultrasons, d'un laser, d'une flamme, d'air chaud ou bien par collage.

10. Composant suivant la revendication 5, caractérisé par le fait que les parties (18, 19) du boîtier sont formées par des bandes découpées ou superposées de papier dur ou de tissu dur et sont réunies par collage ou au moyen de couches multiples préfabriquées (23) (feuilles préimprégnées).

11. Composant suivant la revendication 5, caractérisé par le fait que les parties (18, 19) du boîtier sont formées par une simple superposition de couches multiples préfabriquées (feuilles préimprégnées) (23).

12. Composant suivant la revendication 1, caractérisé par le fait que le boîtier est formé par un cadre (21) et par deux couvercles (19) et que les éléments de raccordement (7, 8) sont formés en deux éléments et sont constitués par des capuchons de raccordement (28, 29) situés à l'extérieur du boîtier (9) ainsi que par des éléments de fond (30, 31), qui sont formés d'un stratifié, dont l'une des faces ou les deux faces sont recouvertes d'un placage en cuivre, et qui sont fixés à l'un des couvercles (19) et sur lesquels porte le corps fonctionnel (2) par ses revêtements (5, 6) ainsi que par le cadre (21) du boîtier et sur la bande en cuivre desquels il est fixé par brasage, et qui établissent une liaison électriquement conductrice avec des surfaces extérieures de raccordement (28, 29).

13. Composant suivant l'une des revendications 1 à 12, caractérisé par le fait que les éléments de raccordement (7, 8) sont réalisés en une tôle déjà préétamée.

14. Composant suivant la revendication 1, caractérisé par le fait qu'un scellement supplémentaire et/ou un dépôt d'adhésif est présent dans le passage de traversée des éléments de raccordement (7, 8) dans la matière plastique du boîtier (9).

15. Composant suivant la revendication 1, caractérisé par le fait que les éléments de raccordement (7, 8) possèdent, dans la section qui est située pour une partie essentielle à l'intérieur du boîtier (9), au moins un rétrécissement (24), utilisé comme dissipateur thermique.

16. Composant suivant la revendication 1, caractérisé par le fait qu'il est fabriqué respectivement pour soi ou bien à partir d'un assemblage (25) de boîtiers individuels (9) sous la forme d'un ruban ou d'une bande, moyennant une séparation ultérieure individuelle par sciage, découpage ou moyennant la mise en oeuvre d'un procédé de découpage au laser.

FIG 1

FIG 2

FIG 3

FIG 4

FIG 5

FIG 6

FIG 11

FIG 7

FIG 8

FIG 10

FIG 9

FIG 12

FIG 13

FIG 14

FIG 15

FIG 16

FIG 17

FIG 18